# EUROPÄISCHE PATENTSCHRIFT

(11) **EP 4 157 606 B1**
(45) Veröffentlichungstag und Bekanntmachung des Hinweises auf die Patenterteilung: **18.10.2023**
(21) Anmeldenummer: 22707691.6
(22) Anmeldetag: 21.02.2022
(51) Int. Cl.: B29C 45/76, B29C 45/82

(54) **HYDRAULIKEINRICHTUNG SOWIE VERFAHREN ZUR REGELUNG EINER HYDRAULIKEINRICHTUNG**
HYDRAULIC DEVICE AND METHOD FOR REGULATING A HYDRAULIC DEVICE
DISPOSITIF HYDRAULIQUE ET PROCÉDÉ DE RÉGULATION D'UN DISPOSITIF HYDRAULIQUE

(30) Priorität: 24.02.2021 DE 102021104398
(43) Veröffentlichungstag der Anmeldung: 05.04.2023
(73) Patentinhaber: Arburg GmbH + Co KG, 72290 Loßburg (DE)
(72) Erfinder: DUFFNER, Eberhard, 72181 Starzach (DE); FEST, Walter, 72290 Lossburg (DE)
(74) Vertreter: RPK Patentanwälte Reinhardt und Kaufmann Partnerschaft mbB
(86) Internationale Anmeldenummer: PCT/EP2022/054212
(87) Internationale Veröffentlichungsnummer: WO 2022/179971

(56) Entgegenhaltungen:
- WO-A1-2005/024245
- DE-A1- 10 308 289
- DE-A1- 10 340 993
- DE-T2- 69 103 228

## Beschreibung

Die Erfindung betrifft eine Hydraulikeinrichtung zur Versorgung von wenigstens einer Arbeitseinheit, insbesondere an einer Kunststoff-Spritzgießmaschine, mit den Merkmalen nach dem Oberbegriff des Anspruchs 1 sowie ein Verfahren zur Steuerung und/oder Regelung einer Hydraulikeinrichtung mit den Merkmalen nach dem Oberbegriff des Anspruchs 8.

Auch bei modernen, beispielsweise elektromechanisch angetriebenen Spritzgießmaschinen sind hydraulische Verbraucher oder Achsen, z.B. Auswerfer, Düse anlegen, Kernzüge, Verschlussdüsen, nach wie vor vorhanden und sind von der Spritzgießmaschine mit Energie zu versorgen. Zum einen hat sich bei bestimmten Maschinenachsen, die die meiste Zeit lediglich im Kraftregelbetrieb arbeiten, wie z.B. bei einer Düsenanlage-Funktion, ein elektromechanischer Antrieb aus Lebensdauer-Gründen nicht bewährt, zum anderen bieten vor allem im Werkzeugbereich die hydraulischen Aktoren wegen ihrer hohen Leistungsdichte und eines geringen Aufwands beim Einbau große konstruktive und ökonomische Vorteile. Ebenfalls aus Gründen der Kompatibilität neuer Maschinen zu bestehenden Werkzeugen wird für neue elektromechanisch angetriebene und energetisch optimal laufende Maschinen eine integrierte hydraulische Leistungsversorgung gefordert.

Die DE 10 2009 020 111 A1 offenbart ein hydrostatisches Antriebssystem mit einer Load-Sensing geregelten Pumpe und mindestens einem Verbraucher, der mittels eines Steuerventils steuerbar ist. Zur Regelung des Fördervolumens der Pumpe ist eine elektronische Druckdifferenzregelung vorgesehen, wobei eine Sensoreinrichtung zur Erfassung der aus dem (höchsten) Lastdruck mehrerer Verbraucher und dem Förderdruck der Pumpe eine Druckdifferenz bildet, wobei die Steuereinrichtung die Pumpe derart einstellt, dass die Druckdifferenz einer voreingestellten Regeldifferenz entspricht. Damit wird eine voreingestellte (also feste) Regeldruckdifferenz zwischen einem Lastdruck (vorzugsweise dem höchsten) und dem Förderdruck der Pumpe geregelt. Damit hängt der Eingangsdruck und damit die Druckdifferenz am Regelventil für den zweiten oder weitere Verbraucher vom Lastdruck des ersten, bzw. des führenden Verbrauchers ab und kann somit nicht konstant gehalten werden. Der Volumenstrom des zweiten Verbrauchers oder des weiteren Verbrauchers ist somit nicht proportional zum Öffnungsquerschnitt des Ventiles und somit nicht definiert. Es wird also entweder jeweils eine Druckwaage für das jeweilige Regelventil der nicht führenden Verbraucher benötigt oder der Verbraucher benötigt eine Rückführung in der Größe, die dem Volumenstrom entspricht, um den Volumenstrom bedarfsgerecht auf die Verbraucher aufzuteilen. Es ergibt sich nicht, wie eine bedarfsgerechte Aufteilung der Volumenströme erfolgt. Lediglich die Summe der Volumenströme soll dem Bedarf aller Verbraucher entsprechen, weil die führende Druckdifferenz aufrechterhalten wird (welche bei Unterversorgung zusammenbricht).

In der DE 10 2015 201 318 A1 ist eine hydraulische Steueranordnung zur Druckmittelversorgung wenigstens zweier hydraulischer Verbraucher offenbart. Eine verstellbare Hydropumpe ist derart veränderbar, dass der Pumpendruck um eine Pumpendruckdifferenz über dem höchsten Lastdruck der gleichzeitig angesteuerten hydraulischen Verbraucher liegt. Dazu werden Druckwaagen für jedes Regelventil benutzt. Der Pumpenregler wird dabei derart angesteuert, dass in der Höhe der Pumpendruckdifferenz unterschiedliche Druckabfälle in der Pumpenleitung berücksichtigt werden und die dem Lastdruck-höchsten hydraulischen Verbraucher zugeordnete Individualdruckwaage bei unterschiedlichen Druckabfällen in der Pumpenleitung wenigstens nahezu ganz geöffnet ist.

In der EP 0 649 722 B2 ist eine Hydraulikeinrichtung zur Versorgung einer Arbeitseinheit an einer Kunststoffspritzgießmaschine mit wenigstens einem Verbraucher offenbart. Mit einem Druckfühler werden Druck-Ist-Werte erfasst und mit einem Druck-Soll-Wert verglichen, wodurch eine Stellgröße für das Regelorgan der Regelpumpe zur Nachsteuerung des Betriebsdruckgefälles als Load-Sensing geliefert wird. Die Maximalleistung der Regelpumpe wird aufgrund von für den jeweiligen Spritzzyklus vorgegebenen Werten in Abhängigkeit einer von Menge und Druck abhängigen weiteren Stellgröße durch den Frequenzumrichter vorgegeben, wobei die Pumpenleistung der Regelpumpe unterhalb ihrer Maximalleistung am Regelorgan durch die erste Stellgröße von der Steuerung aktiv regelbar ist.

In der DE 196 80 008 C1 ist eine Vorrichtung mit wenigstens einem kontrollierten hydraulisch angetrieben Aktuator, einer hydraulischen Pumpe und einer Steuer/Regel-Einrichtung offenbart. Die Steuer/Regel-Einrichtung wirkt aufgrund erfasster Aktuator-Daten auf den elektrischen Antrieb der hydraulischen Pumpe, wobei diese mittels einer Leitung ohne dissipative Stellglieder, also ohne Regelventile, zu einem Aktuator führt, jedoch kein Lastwechsel der Hydraulikpumpe erfolgt.

In der DE 102011 012 714 A1 ist eine hydraulische Antriebseinheit für eine Spritzgießmaschine offenbart, wobei mittels einer Messeinrichtung das Durchflussvolumen der Hydraulikflüssigkeit pro Zeiteinheit gemessen wird und in ein entsprechendes Signal der Steuer- oder Regeleinheit weitergeleitet wird, welche daraus die Position des Kolbens berechnet wird.

Die DE 103 40 993 A1 zeigt eine Hydraulikeinrichtung zur Versorgung von mehreren Arbeitseinheiten an einer Kunststoff-Spritzgießmaschine mit einer Steuerung, einer Ventilregelung und einem Zentralantrieb, wobei jeder der Arbeitseinheiten ein Regelventil mit einer Regelventil-Geometrie zugeordnet ist und wobei Drucksensoren vorgesehen sind, welche dazu eingerichtet sind, pro Regelventil jeweils einen Druck vor und nach dem Regelventil, d.h. einen Systemdruck und Lastdruck der Arbeitseinheiten zu erfassen, wobei die Ventilregelung Wissen über die Regelventil-Geometrie der Regelventile aufweist und dazu eingerichtet ist, aus einem Zusammenhang zwischen der Regelventil-Geometrie und aus den vor und nach den Regelventilen erfassten Drücken resultierenden Druckdifferenz einen Volumenstromistwert pro Regelventil abzuleiten. Die Steuerung ist dazu eingerichtet, aus einem Volumenstromsollwert der Arbeitseinheiten eine Sollwertvorsteuerung für den Zentralantrieb so abzuleiten, dass der Systemdruck wenigstens einem höchsten Lastdruck der Arbeitseinheiten entspricht, indem die Verstellpumpe über einen MikroController und das hydraulische Regelventil so weit verstellt wird, bis der Volumenstrom dem Sollwert entspricht.

In der WO 2005/024245 A1 werden die Lastdrücke der Verbraucher erfasst und in Abhängigkeit davon wird die Einstellung von elektrisch proportional verstellbaren Zumessblenden geändert Mit den Regelventilen sind keine normierte Stellbefehle und/oder normierte Durchflussmengen und/oder normierte Volumenströme der Arbeitseinheiten einstellbar. Die Verstellpumpe wird auf einen Wunsch-Summenstrom eingestellt, sodass die Versorgung der einzelnen Verbraucher jeweils in einem festen Verhältnis verringert wird.

In der DE 691 03 228 T2 sind ein Druckkompensationsmodus und ein Strömungskompensationsmodus für eine Pumpensteuerung offenbart. Im Strömungskompensationsmodus hält das Ventil den Druckabfall über dem Drosselventil auf einem konstanten Wert, welcher elektrisch in Abhängigkeit eines Strömungskompensationssignals durch den Maschinenregler einstellbar ist. Im Druckkompensationsmodus liefert die Pumpe nur diejenige Strömungsmenge, die notwendig ist, um den vorgegebenen Solldruck aufrechtzuerhalten. Eine Einstellung normierter Stellbefehle und/oder normierter Durchflussmengen und/oder normierter Volumenströme ist nicht offenbart. Beispielweise wird dort eine Einspritzgeschwindigkeit eingestellt, aus der dann die Strömungsmenge in Gallonen pro Minute berechnet wird.

Die DE 103 08 289 A1 zeigt einen LS-Wegeventilblock mit einer Vielzahl von Arbeitsanschlüssen. Mit einer elektrischen Sensoranordnung wird der Druck in der Pumpenleitung und in der Lastdruckleitung gemessen und die Regeldruckdifferenz (Pumpendruck minus höchster Lastdruck) erfasst. In Abhängigkeit von diesen erfassten Werten wird ein generiertes elektrisches Signal abgegeben, das nach vorgegebenen Protokollen verarbeitet und als entsprechende Steuersignale an elektrisch gesteuerte Baugruppen abgegeben wird. Die Steuerung ist so ausgelegt, dass im Fall einer Unterversorgung die elektrisch angesteuerte Regelventilanordnung in Abhängigkeit von dem mittels der elektrischen Sensoranordnung gemessenen Regeldruckgefälle so zurückgestellt wird, dass das Förderstromangebot der Pumpe mit dem Summendruckmittelbedarf der Verbraucher abgeglichen ist.

Im weiteren vorhandenen Stand der Technik sind aktuell im Wesentlichen zwei Grundvarianten, der in die Spritzgießmaschine integrierten fluiden Leistungsversorgung üblich.

Die erste Variante für rein serielle Kernzug- oder Nebenachs-Funktionen wird mittels sogenannten servoelektrisch geregelten Konstantpumpen und einfachem Achszuschaltventil realisiert. So können mehrere Achsen nacheinander und bedarfsangepasst von einer energetisch optimal an den Achsverbraucher angepassten Pumpe-Servomotor-Antriebseinheit betrieben werden. Ferner sind aus dem Stand der Technik Hydrauliksysteme bekannt, bei denen mehrere Verbraucher oder Achsen gleichzeitig von derselben Druck- oder Volumenstromquelle versorgt werden. Der Volumenstrom der Quelle wird auf die Verbraucher aufgeteilt. Eine statische Aufteilung erfolgt zum Beispiel mittels sogenannter Stromteilventile oder Innenzahnrad-Stromteiler.

Die zweite Variante beispielsweise für Hochleistungsmaschinen mit mehreren gleichzeitigen und hoch dynamischen Anforderungen an die fluide Leistungsversorgung wird meist mittels einer Konstantdruck-Versorgung über Hydraulikspeicher (oder einer groß dimensionierten Konstantdruck-Pumpe) und einem Mengen-Druck-Regelventil am einzelnen Verbraucher realisiert. Eine besondere Herausforderung ergibt sich für die dynamische Aufteilung des Volumenstromes, wenn die Quelle den Druck und den Volumenstrom bedarfsgerecht bereitstellen soll. Um eine Beeinflussung der Achsbewegungen oder Achskräfte bei Parallelschaltung mehrerer Achsen zu vermeiden, wird ein Systemdruck/Speicherdruck mit einer hohen Reserve bereitgestellt. Dies führt zu entsprechend energetisch ungünstigem Verhalten, da die nicht benötigte Leistung von Überschussdruck mal benötigter Menge im Regelventil zu Wärme in das Trägermedium umgewandelt werden muss. Da die Spritzgießmaschine universell gekauft wird, ist die zweite Variante bei einem Werkzeug mit nur sequentieller Bewegung nicht in der Lage, einen entsprechend der ersten Variante Energie-optimalen Zyklus zu fahren und umgekehrt kann die erste Variante keine Werkzeuge mit gleichzeitigen Kernzug-Bewegungen bedienen. Eine dynamische Aufteilung kann beispielsweise mittels Proportional-Stromregelventilen erfolgen, von denen je eines einem Verbraucher zugeordnet ist.

Bekannt sind im Stand der Technik noch weitere Ausführungen, bei denen mehrere Servopumpen der ersten Variante eingebaut oder bedarfsweise zugestellt werden. Diese Ausführungen beinhalten jedoch erheblich kommerzielle Nachteile und sind in der Gesamtenergiebilanz bei bestimmten Betriebspunkt-Anforderungen teilweise energetisch schlechter als die Konstantdruck-Systeme (häufige Leistungsänderungen, häufiges Hoch- und Runterfahren des Antriebs, hohe Anforderung an die Druckhaltefunktion). Auch sind diese Ausführungen in Bezug auf ihre Flexibilität sehr eingeschränkt, da die Spezifikation der Nebenachsengleichzeitigkeit bei der Maschinenauslegung für alle Zeit festgelegt ist.

Bekannte Lösungen im Stand der Technik haben zur Folge, dass sich die Verbraucher gegenseitig so sehr beeinflussen, dass dies für die Anwendung relevant werden kann und damit auch die Qualität der herzustellenden Spritzteile beeinträchtigen kann.

Ausgehend von diesem Stand der Technik liegt der vorliegenden Erfindung die Aufgabe zugrunde, eine Hydraulikeinrichtung zur Versorgung von wenigstens einer Arbeitseinheit, insbesondere an einer Kunststoff-Spritzgießmaschine bereitzustellen, welche in Bezug auf Funktionalität, Energie, Effizienz und Wirtschaftlichkeit verbessert ist.

Diese Aufgabe wird durch eine Hydraulikeinrichtung mit den Merkmalen des Anspruchs 1 sowie durch ein Verfahren mit den Merkmalen des Anspruchs 8 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Hydraulikeinrichtung zur Versorgung von mehreren Arbeitseinheiten, insbesondere an einer Kunststoff-Spritzgießmaschine zur Verarbeitung von Kunststoffen und anderer plastifizierbarer Materialien, weist wenigstens eine Steuerung, wenigstens eine Ventilregelung und/oder Ventilsteuerung und einen Zentralantrieb auf. Die Steuerung kann die Ventilregelung und/oder Ventilsteuerung umfassen oder umgekehrt. Pro Arbeitseinheit ist wenigstens ein Regelventil mit einer Regelventil-Geometrie (z.B. eine Schieber-Geometrie), bevorzugt ein elektronisches und/oder digitales Regelventil vorgesehen. Die Regelventile können beispielsweise als Stetig- bzw. Proportionalventile, die den Volumenstrom zu den Arbeitseinheiten regeln, ausgeführt sein. Weiter sind Drucksensoren, z.B. Druckaufnehmer vorgesehen, welche pro Regelventil jeweils wenigstens einen Druck vor und nach dem Regelventil, den Lastdruck der Arbeitseinheiten und den Systemdruck erfassen. Grundsätzlich kann auch nur eine der Arbeitseinheiten mit dem Regelventil ausgestattet sein, während die verbleibenden Arbeitseinheiten z.B. mit einem Zuschaltventil angesteuert werden. Pro Arbeitseinheit kann vorzugsweise wenigstens ein digitales Regelventil mit einer Schieber-Geometrie und integrierter Ventilregelung und/oder Ventilsteuerung vorgesehen sein. Die Regelventile können z.B. als Stetigventile ausgeführt sein, die den Volumenstrom zu den Arbeitseinheiten regeln.

Um vorteilhaft eine Verbesserung der im Stand der Technik existierenden Lösungen in Bezug auf Funktionalität, Energie, Effizienz und Wirtschaftlichkeit zu erreichen, weist die Ventilregelung und/oder Ventilsteuerung Wissen über die Regelventil-Geometrie der Regelventile auf, z.B. als Steuerkennlinie, Volumenstrom-Signal-Kennlinie oder als Funktion "Öffnungsquerschnitt = f(Hub)", Geometrie des Ventilschiebers, und ist dazu eingerichtet, aus einem Zusammenhang zwischen der Regelventil-Geometrie und wenigstens einer aus den vor und nach dem wenigstens einen Regelventil erfassten Drücken resultierenden Druckdifferenz wenigstens einen Volumenstromistwert pro Regelventil abzuleiten. Die Steuerung ist dazu eingerichtet, aus dem Volumenstromsollwert der wenigstens einen der Arbeitseinheiten oder der mehreren Arbeitseinheiten und den Volumenstromistwerten des wenigstens einen Regelventils wenigstens eine Sollwertvorsteuerung für den Zentralantrieb so abzuleiten, dass der Systemdruck wenigstens dem höchsten Lastdruck der wenigstens einen Arbeitseinheit entspricht. Dass der Systemdruck dem höchsten Lastdruck wenigstens entspricht, bedeutet in diesem Zusammenhang, dass der Systemdruck größer gleich dem Lastdruck ist und diesen z.B. auch um einen Wert übersteigen kann. Vorteilhaft wird bzw. werden so z.B. keine Druckwaagen benötigt.

Der Wert kann beispielsweise manuell und/oder automatisch vorgegeben werden, beispielsweise von der Steuerung. Auch ist es möglich, dass der Wert in Abhängigkeit von Parametern des Spritzgussprozesses vorgegeben wird. Das Wissen kann beispielsweise als Algorithmen, Funktionen und/oder Steuerkennlinien in einem elektronischen und/oder digitalen Speicher vorhanden sein. Prinzipiell ist es denkbar, dass das Wissen bereits in der Ventilregelung und/oder der Ventilsteuerung vorliegt, manuell eingegeben wird oder automatisch, z.B. über eine Netzwerkverbindung zur Verfügung gestellt wird.

Für jedes Regelventil ergibt sich aus einer bestimmten Druckdifferenz und einer bestimmten Einstellung des Ventils ein entsprechender Volumenstrom, bevorzugt ein entsprechender normierter Volumenstrom, z.B. in l/min. Mit den Regelventilen lassen sich so normierte Stellbefehle und/oder Durchflussmengen der Arbeitseinheiten unabhängig vom Systemdruck und/oder dem Lastdruck der Arbeitseinheiten einstellen. Weiter vorteilhaft entfallen somit Abgleichaufgaben im Servicefall, da die Regelventile nicht neu eingestellt werden müssen.

Beispielsweise sind zwei Ventiltypen im Einsatz, wobei das erste Ventil beispielhaft einen nominellen maximalen Volumenstrom von 180l/min aufweist und das zweite Ventil einen nominellen maximalen Volumenstrom von zum Beispiel 140l/min aufweist. Bei linearisierten Kennlinien würde im Beispiel das erste Ventil bei einer Stellgröße von 50% auf 90 l/min Volumenstrom und das zweite Ventil bei einer Stellgröße von 50% auf 70l/min Volumenstrom regeln, vorausgesetzt dass ausreichend Versorgungsdruck vorhanden ist.

Normiert bedeutet in diesem Zusammenhang für einen normierten Volumenstrom und/oder eine normierte Durchflussmenge, dass die Sollwertvorgabe für den Volumenstrom und/oder die Durchflussmenge z.B. 80l/min lautet und beide Ventile auf so einen Volumenstrom von 80l/min regeln, unabhängig von Druckschwankungen und unabhängig vom nominellen, maximalen Volumenstrom. Es ergibt sich so eine abhängig von einer Stellgröße normierte Durchflussmenge bzw. ein Volumenstrom, welcher last- und systemdruckunabhängig ist. Vorzugsweise muss damit im Ergebnis z.B. bei Verwendung unterschiedlicher Ventile oder auch bei Austausch anderer Systemkomponenten keine neue Regelung/Steuerung implementieret werden.

Grundsätzlich kann auch auf andere Größen als den Volumenstrom oder die Durchflussmenge normiert werden, sofern über einen Stellbefehl skaliert eine entsprechend zugeordnete Größe normiert einstellbar ist.

Ein normierter Stellbefehl ist in diesem Zusammenhang ein Befehl, mit welchem z.B. ein normierter Volumenstrom und/oder eine normierte Durchflussmenge eingestellt werden kann. Beispielsweise können zu normierende Größen auf einen Volumenstrom z.B. in l/min abgebildet (normiert) werden, sodass unabhängig vom verwendeten Ventil (System- und Lastdruck) der gewünschte Volumenstrom z.B. durch eine Kennlinie eingestellt bzw. geregelt werden kann.

Vorteilhaft kann bei der Vorsteuerung auf Basis der Volumenstromistwerte auch dann eine passende Vorsteuerung erfolgen, wenn die Regelventile sich in einer Druckregelung befinden und ihr Volumenstrom deshalb nicht (nur) vom Volumenstromsollwert abhängt.

Das Regelventil kann somit vorteilhaft entsprechend des vorgegebenen Sollwerts unabhängig vom System- und Lastdruck eine physikalisch normierte Durchflussmenge an der Arbeitseinheit ausregeln und im quasi statischen Fall der Druckregelung unabhängig von Schwankungen des Systemdrucks die Druckhaltefunktion ausführen. Selbstverständlich gilt dies nur solange, wie die hydrodynamischen Voraussetzungen zur Kompensation der Verluste über das Ventil durch ein entsprechendes Delta p als Differenzdruck zwischen Systemdruck und den Lastdrücken gegeben sind.

Somit wird vorteilhaft im Hinblick auf Funktionalität, Energie, Effizienz und Wirtschaftlichkeit nicht mehr Volumenstrom und/oder Druck zur Verfügung gestellt, als für die Summe der Arbeitseinheiten gerade benötigt wird. Dafür wird der Volumenstrom und/oder Druck des Zentralantriebs auf die Arbeitseinheiten aufgeteilt. Dabei wird vorteilhaft die gegenseitige Beeinflussung der Arbeitseinheiten auf ein Minimum begrenzt, und es ist jederzeit möglich, den Volumenstrom und/oder den Druck jeder Arbeitseinheit unabhängig von anderen Arbeitseinheiten zu regeln und/oder zu begrenzen.

Typischerweise ergibt sich bei der Verwendung solcher Regelventile und einer entsprechenden Steuerung eine vorteilhaft wesentlich schnellere Verstellbarkeit und dynamische Reaktion der gesamten Druckversorgung.

Beispielsweise wird für mindestens zwei gleichzeitige, unbeeinflusste Arbeitseinheitsbewegungen der optimale Systemdruck realisiert, indem eine Überlagerung mittels des Zentralantriebs gefahren wird, entsprechend dem Maximum des Druckbedarfs der mindestens zwei gleichzeitig betreibbaren Arbeitseinheiten durch entsprechende Ansteuerung des Zentralantriebs mittels der Steuerung mit system relevant richtiger Regelung von Menge (Drehzahl Motor) und Systemdruck als Überlagerung.

Vorzugsweise ist jeder Arbeitseinheit der mehreren Arbeitseinheiten ein Regelventil zugeordnet ist. Dadurch lässt sich vorteilhaft eine genaue und präzise Sollwertvorsteuerung für alle Arbeitseinheiten auch bei gleichzeitiger Bewegung der Arbeitseinheiten erreichen, was zur Qualität der zu fertigenden Spritzteile beiträgt.

Bevorzugt weist die Ventilregelung und/oder die Ventilsteuerung Wissen über das verwendete hydraulische Medium auf, wodurch sich vorteilhaft eine genaue und präzise Sollwertvorsteuerung ergibt. Beispielsweise spielt im Spalt des Ventilschiebers die Viskosität für die laminare Strömung eine nennenswerte Rolle, was sich bezogen auf die Anwendung auf den Volumenstrom in der Nähe des Nullpunktes (Überdeckungskante) auswirkt. Der Ventilregelung und/oder der Ventilsteuerung ist bevorzugt der genaue Zusammenhang zwischen Druck bzw. Druckdifferenz, der Einstellung des Regelventils und des Volumenstroms in Abhängigkeit des verwendeten hydraulischen Mediums bekannt.

Die Verteilung des hydraulischen Mediums ist z.B. in einer Spritzgießmaschine zur Arbeitseinheit meist über kompressible Volumina, z.B. Schläuche realisiert, so dass eine gewisse hydraulische Speicherwirkung oder hydraulische Kapazität dem System helfen, direkte Lastsprünge, z.B. durch Anschlag fahren einer Arbeitseinheit, in der Regeldynamik an der zweiten Arbeitseinheit ohne Beeinflussung der selbst zu steuernden Arbeitseinheit zu beherrschen. Ebenfalls erlauben an realen Anlagen immer existierende kompressible Totvolumina der Zentralantriebe sowie der Steuerung mittels Beobachtung des Systemdrucks direkt am Druckversorger diesen mit seiner langsameren Dynamik als das Regelventil rechtzeitig und energieeffizient in der Volumenförderung reaktiv in Druck/Menge herunter bzw. herauf zu fahren.

Vorteilhaft für eine verbesserte Modularität im Anlagenbau ist die Ventilregelung und/oder die Ventilsteuerung bevorzugt im oder am Regelventil vorgesehen. Dadurch "kennt" sich das Regelventil vorteilhaft selbst, sodass bei einem Tausch des Regelventils keine Kalibration vorgenommen werden muss. Prinzipiell ist es aber auch möglich, dass die Ventilregelung und/oder die Ventilsteuerung an einem anderen Ort vorgesehen ist, beispielsweise in oder an der Steuerung. Denkbar ist auch, dass die Steuerung die Ventilregelung und/oder die Ventilsteuerung ist oder umfasst.

Bevorzugt ist wenigstens ein Temperatursensor, z. B. ein Temperaturaufnehmer vorgesehen, wodurch vorteilhaft präzise Viskositätsvorhersagen des Hydraulikmediums durchgeführt werden können und sich so ein genauerer Durchfluss ergibt. Weiter bevorzugt ist pro Regelventil jeweils wenigstens ein Temperatursensor vorgesehen. Vorteilhaft kann dadurch die Viskosität je Arbeitseinheitszweig genauer bestimmt werden.

Da Spritzgießmaschinen meist individuell und modular aufgebaut sind, ist ebenfalls vorteilhaft für eine erhöhte Modularität im Anlagenbau der Drucksensor bevorzugt im oder am Regelventil vorgesehen. Für den Fall, dass das Ventil aufgrund beispielsweise eines Umbaus getauscht wird, müssen vorteilhaft keine weiteren Umbaumaßnahmen durchgeführt werden.

Prinzipiell ist es möglich, dass bevorzugt jedes Regelventil einen Drucksensor, einen Temperatursensor und/oder eine Ventilregelung und/oder eine Ventilsteuerung aufweist.

Vorzugsweise handelt es sich bei der Regelventil-Geometrie der Regelventile um die Schieber-Geometrie des Ventilschiebers, so dass vorteilhaft in Kenntnis dieser Geometrie eine zuverlässige, wirtschaftliche und energieeffiziente Regelung z.B. der Volumenströme im Sinne einer Förderstromteilung ermöglicht wird.

Die Aufgabe wird zudem durch ein Verfahren mit den Merkmalen des Anspruches 8 gelöst. Für eine Verbesserung der im Stand der Technik existierenden Lösungen in Bezug auf Funktionalität, Energie, Effizienz und Wirtschaftlichkeit ist zur Steuerung und/oder Regelung einer Hydraulikeinrichtung zur Versorgung mehrerer Arbeitseinheiten insbesondere an einer Kunststoff-Spritzgießmaschine mit wenigstens einer Steuerung und einem Zentralantrieb, beispielsweise einer Pumpe, an wenigstens einer der Arbeitseinheiten jeweils wenigstens ein Regelventil vorgesehen, wobei pro Regelventil jeweils wenigstens eine Druckdifferenz aus jeweils wenigstens einem erfassten Druck vor und nach dem Regelventil bestimmt wird, aus einem Zusammenhang zwischen der Regelventil-Geometrie und der Druckdifferenz des Regelventils wenigstens ein Volumenstromistwert pro Regelventil abgeleitet wird und aus den Volumenstromsollwerten der wenigstens einen Arbeitseinheit und den Volumenstromistwerten des wenigstens einen Regelventils wenigstens eine Sollwertvorsteuerung für den Zentralantrieb so abgeleitet wird, dass der Systemdruck wenigstens dem höchsten Lastdruck der Arbeitseinheiten entspricht. Dass der Systemdruck dem höchsten Lastdruck wenigstens entspricht, bedeutet in diesem Zusammenhang, dass der Systemdruck größer gleich dem Lastdruck ist und diesen z.B. auch um einen Wert übersteigen kann.

Mit dem wenigstens einen Regelventil werden normierte Stellbefehle und/oder Durchflussmengen und/oder Volumenströme der Arbeitseinheiten unabhängig vom Systemdruck und/oder dem Lastdruck der wenigstens einen Arbeitseinheit eingestellt, so dass vorteilhaft z.B. ein gewünschter Volumenstrom durch eine Kennlinie eingestellt bzw. geregelt werden kann. Es ergibt sich so z.B. eine abhängig von einer Stellgröße normierte Durchflussmenge bzw. ein Volumenstrom.

Vorzugsweise steuert jeweils ein Regelventil den Druck jeder der mehreren Arbeitseinheiten Arbeitseinheit. Dadurch lässt sich vorteilhaft eine genaue und präzise Sollwertvorsteuerung für alle Arbeitseinheiten auch bei gleichzeitiger Bewegung der Arbeitseinheiten erreichen, was zur Qualität der zu fertigenden Spritzteile beiträgt.

Für eine vorteilhaft schnelle Verstellbarkeit sowie präzise Bereitstellung der Durchflussmengen erfolgt bevorzugt die Sollwertvorsteuerung zeitlich kontrolliert und/oder in Echtzeit. Beispielsweise kann die Sollwertvorsteuerung auf Basis der Volumenstromsollwerte der Arbeitseinheiten zeitlich mit den Arbeitseinheiten kontrolliert und/oder auf Basis der Volumenstromistwerte der Regelventile in Echtzeit erfolgen. Zeitlich koordiniert bedeutet in diesem Zusammenhang, dass den Arbeitseinheiten der Volumenstromsollwert zu einem bestimmten Zeitpunkt mittels der Sollwertvorsteuerung zur Verfügung gestellt wird. Beispielsweise kann die Sollwertvorsteuerung in Echtzeit auf Basis der Volumenstromistwerte vorteilhaft auch dann eine passende Sollwertvorsteuerung bereitstellen, wenn sich die Regelventile in Druckregelung befinden und ihr Volumenstrom deshalb nicht (nur) vom Volumenstromsollwert abhängt.

Um vorteilhaft Leckagen an den Arbeitseinheiten zu erkennen, wird bevorzugt wenigstens eine zyklische Integration des von den Regelventilen geregelten normierten Volumenstroms über wenigstens einen Arbeitseinheitszyklus ausgeführt. Am Integral lässt sich dann z.B. im Vergleich mit einem vorigen Arbeitseinheitszyklus erkennen, ob eine Leckage vorliegt.

Für eine vorteilhafte Erkennung von Verschleiß an der Ventilmechanik, beispielsweise an Steuerkanten oder bei einer Leckage über einen Kolben werden bevorzugt die Volumenstromistwerte der Regelventile fortlaufend überwacht, ausgewertet und in Korrelation mit den Volumenstromistwerten während wenigstens eines zyklischen Maschinenbetriebs gesetzt. Beispielsweise können so im Vergleich zu früheren Arbeitseinheitszyklen Rückschlüsse auf den Verschleiß gezogen werden.

Für einen vorteilhaft energetisch optimierten Betrieb sowie für eine Verbesserung bezüglich der Anwendung an Gleichzeitigkeitsanforderungen oder erhöhte Anforderungen an Dynamik und Reproduzierbarkeit wird bevorzugt das wenigstens eine Regelventil bei seriellen Bewegungen der wenigstens einen Arbeitseinheit als Schaltventil und/oder Regelventil bei gleichzeitigen Bewegungen der Arbeitseinheiten als Load-Sensing-Regelventil betrieben. Vorteilhaft können die Arbeitseinheiten so im Spritzgießzyklus direkt mittels der Steuerung und der Zentraleinheit betrieben werden. Beispielweise werden die Regelventile durch die Steuerung als Schaltventil auf maximalen Durchfluss oder geschlossen geschaltet. Durch das Fehlen hydromechanischer Druckwaagen erreicht man somit im seriellen Betrieb vorteilhaft die annähernd gleiche Energieeffizienz wie für rein serielle Pumpensysteme mit Zuschaltventil für die Arbeitseinheit.

Für ein vorteilhaftes Optimum an Dynamik und Energieverbrauch pro Zyklus wird bevorzugt die Ableitung der Sollwertvorsteuerung mittels eines zyklisch lernenden Beobachters selbst optimierend angepasst. Beispielsweise kann die Drucküberlagerung im Systemkreis mittels des zyklisch lernenden Beobachters einem Optimum an Dynamik und Energieverbrauch/Zyklus selbstoptimierend angepasst werden unter Beobachtung der Regelgüte in den Arbeitseinheit-Kreisen, insbesondere der auftretenden Drucküber-/Unterschwinger im ArbeitseinheitKreis.

Bevorzugt kann die Steuerung bezüglich von wiederkehrenden zyklischen Bewegungen im Dauerbetrieb einen oder mehrere Beobachter, z.B. digitale Beobachter in Echtzeit bilden, um in Echtzeit oder zyklisch ein Condition Monitoring des Zentralantriebs, der Peripherie und der Arbeitseinheiten durchzuführen. Vorteilhaft ergibt sich so eine sehr präzise Leckage Erkennung.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine Hydraulikeinrichtung mit zwei Arbeitseinheiten,
- Fig. 2: die Hydraulikeinrichtung gemäß Fig. 1 mit zwei Regelventilen,
- Fig. 3: die Hydraulikeinrichtung gemäß Fig. 1 mit einem Regelventil,
- Fig. 4a: ein Volumenstrom-Zeit-Diagramm von zwei Arbeitseinheiten ohne Vorsteuerung nach dem Stand der Technik,
- Fig. 4b: das Diagramm gemäß Fig. 4a mit Vorsteuerung,
- Fig. 5: ein schematisches Verfahrensdiagramm.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

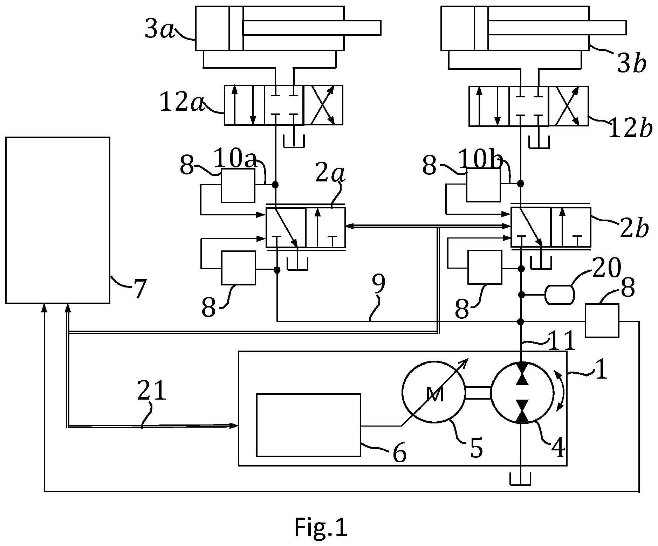

In Fig. 1 ist eine Hydraulikeinheit zur Versorgung von mehreren Arbeitseinheiten, im Ausführungsbeispiel von zwei Arbeitseinheiten 3a, 3b, beispielsweise einem Auswerfer, einer Düse, einem Kernzug oder einer Verschlussdüse, insbesondere an einer Kunststoff-Spritzgießmaschine mit wenigstens einer Steuerung 7, wenigstens einer Ventilregelung und/oder einer Ventilsteuerung und einem Zentralantrieb 1 dargestellt. Die Steuerung 7 kann die Ventilregelung und/oder die Ventilsteuerung aufweisen und umgekehrt. Eine derartige Kunststoff-Spritzgießmaschine dient zur Verarbeitung von Kunststoffen und anderer plastifizierbarer Materialien wie z.B. auch keramische, metallische und/oder pulverförmige Massen.

Der Zentralantrieb 1 kann wie in Fig. 1 dargestellt eine Pumpe 4, z.B. eine Konstantpumpe, einen Motor 5, z.B. einen Servomotor, und eine Motorsteuerung 6 aufweisen. Prinzipiell können jedoch auch weitere Arbeitseinheiten 3a, 3b vorgesehen sein. Pro Arbeitseinheit 3a, 3b ist in Fig. 1 jeweils ein Schaltventil 12a, 12b und jeweils ein Regelventil 2a, 2b vorgesehen. Die Regelventile 2a, 2b im Ausführungsbeispiel der Fig. 1 sind beispielsweise als elektronische und/oder digitale Stromregelventile, p/Q-Ventile mit einer elektrischen Druckwaage-Funktion, Proportionalventile oder als Stetigventile ausgeführt, die den Volumenstrom zu den Arbeitseinheiten 3a, 3b regeln.

Drucksensoren 8 erfassen pro Regelventil 2a, 2b jeweils wenigstens einen Druck vor und nach dem entsprechenden Regelventil 2a, 2b, die Lastdrücke 10a, 10b der Arbeitseinheiten 3a, 3b sowie den Systemdruck 9. Die Drücke können bevorzugt an die Steuerung 7 und/oder die Ventilregelung und/oder die Ventilsteuerung übermittelt werden, bevorzugt über eine Verbindung 21, z.B. einen Bus. Prinzipiell sind jedoch auch andere Verbindungen 21 denkbar, z.B. ein drahtloses Netzwerk. Über die Verbindung 21 sind die Regelventile 2a, 2b bevorzugt mit der Steuerung 7 und dem Zentralantrieb 1 und/oder der Ventilregelung und/oder der Ventilsteuerung in Kontakt.

Die Ventilregelung und/oder die Ventilsteuerung weist Wissen über die Regelventil-Geometrie der Regelventile 2a, 2b auf. Das Wissen kann z.B. als Steuerkennlinie, Volumenstrom-Signal-Kennlinie oder als Funktion "Öffnungsquerschnitt = f(Hub)" oder auch in Form der Geometrie des Ventilschiebers vorliegen. Prinzipiell ist es denkbar, dass das Wissen bereits in der Ventilregelung und/oder der Ventilsteuerung vorliegt, manuell eingegeben wird oder automatisch, z.B. über eine Netzwerkverbindung zur Verfügung gestellt wird. Die Ventilregelung und/oder die Ventilsteuerung ist dazu eingerichtet, aus einem Zusammenhang zwischen der Regelventil-Geometrie und wenigstens einer aus den vor und nach dem wenigstens einen Regelventil 2a, 2b erfassten Drücken resultierenden Druckdifferenz wenigstens ein Volumenstromistwert pro Regelventil 2a, 2b abzuleiten.

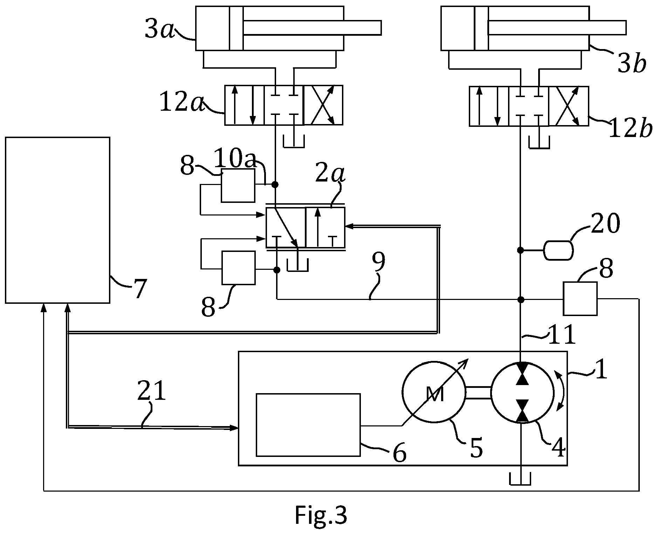

Grundsätzlich sind in der Regel mehrere Regelventile vorgesehen, wenngleich in Fig. 3 lediglich ein p/Q-Ventil als Regelventil 2a und ein Schaltventil 12a plus ein Schaltventil 12b am Zentralantriebsstrang für eine rein serielle Bewegung vorgesehen sind.

Auch in diesem Fall, in dem nicht alle bzw. in Fig. 3 nur eine der Arbeitseinheiten mit einem Regelventil ausgerüstet ist, kann die erfindungsgemäße Vorrichtung und das erfindungsgemäße Verfahren vorteilhaft eingesetzt werden. Eine der Arbeitseinheiten kann z.B. über ein Schaltventil versorgt werden. Zum Beispiel könnte dies die Arbeitseinheit einer Verschlussdüse sein, deren Schaltvorgang dennoch systemisch auch die andren Arbeitseinheiten beeinflusst. Befindet sie sich z.B. im Druckhaltemodus, benötigt die Vorsteuerung einen Mindestbetrag an Druck für diese gleichzeitige Betätigung.

Der Ventilregelung und/oder der Ventilsteuerung ist der genaue Zusammenhang zwischen Druck und Einstellung des Regelventils 2a, 2b bekannt, so dass die Ventilregelung und/oder die Ventilsteuerung weiß, welcher Druck welche Einstellung des Regelventils zur Folge hat und umgekehrt.

Im Ausführungsbeispiel in Fig. 1 weisen die Regelventile 2a, 2b die Ventilregelung und/oder die Ventilsteuerung und das Wissen über die Regelventil-Geometrie der Regelventile 2a, 2b einschließlich der Ventilschieber-Geometrie auf und sind als elektronische und/oder digitale Proportionalventile ausgeführt. Die Regelventile 2a, 2b leiten aus dem Zusammenhang zwischen der Regelventil-Geometrie und der Druckdifferenz einen Volumenstromistwert, bevorzugt einen normierten Volumenstromistwert ab und übermitteln diesen an die Steuerung 7.

Die Steuerung 7 ist dazu eingerichtet, um aus dem Volumenstromsollwert der Arbeitseinheiten 3a, 3b und den Volumenstromistwerten der Regelventile 2a, 2b wenigstens eine Sollwertvorsteuerung für den Zentralantrieb 1 so abzuleiten, dass der Systemdruck 9 wenigstens dem höchsten Lastdruck der Arbeitseinheiten 3a, 3b entspricht. Der Systemdruck kann also gleich oder auch um einen Wert höher als der Lastdruck sein.

Das wenigstens eine Regelventil 2a, 2b regelt somit entsprechend des vorgegebenen Sollwerts unabhängig vom Systemdruck 9 und Lastdruck 10a, 10b eine physikalisch normierte Durchflussmenge, z.B. in l/min an der Arbeitseinheit 3a, 3b aus und führt im quasi statischen Fall der Druckregelung unabhängig von Schwankungen des Systemdrucks die Druckhaltefunktion aus. Selbstverständlich gilt dies nur solange, bis die hydrodynamischen Voraussetzungen zur Kompensation der Verluste über das Ventil durch ein entsprechendes Delta p zwischen Systemdruck 9 und den Lastdrücken 10a, 10b gegeben sind. Mit dem wenigstens einen Regelventil 2a, 2b werden somit normierte Stellbefehle und/oder normierte Durchflussmengen und/oder normierte Volumenströme der Arbeitseinheiten 3a, 3b unabhängig vom Systemdruck 9 und/oder dem Lastdruck der wenigstens einen Arbeitseinheit eingestellt.

Dies sei an einem Beispiel näher erläutert:
Sind beispielsweise zwei Ventiltypen im Einsatz, wobei das erste Ventil einen nominellen maximalen Volumenstrom von zum Beispiel 180l/min aufweist und das zweite Ventil einen nominellen maximalen Volumenstrom von zum Beispiel 140l/min aufweist. Bei linearisierten Kennlinien würde im Beispiel das erste Ventil bei einer Stellgröße von 50% auf 90 l/min Volumenstrom und das zweite Ventil bei einer Stellgröße von 50% auf 70l/min Volumenstrom regeln, vorausgesetzt dass ausreichend Versorgungsdruck vorhanden ist.

Normiert bedeutet in diesem Zusammenhang für einen normierten Volumenstrom und/oder eine normierte Durchflussmenge, dass die Sollwertvorgabe für den Volumenstrom und/oder die Durchflussmenge z.B. 80l/min lautet und beide Ventile auf so einen Volumenstrom von 80l/min regeln, unabhängig von Druckschwankungen und unabhängig vom nominellen, maximalen Volumenstrom. Es ergibt sich so eine abhängig von einer Stellgröße normierte Durchflussmenge bzw. ein normierter Volumenstrom, welcher last- und systemdruckunabhängig ist. Vorzugsweise muss damit im Ergebnis z.B. bei Verwendung unterschiedlicher Ventile oder auch bei Austausch anderer Systemkomponenten keine neue Regelung/Steuerung implementieret werden.

Grundsätzlich kann auch auf andere Größen als den Volumenstrom oder die Durchflussmenge normiert werden, sofern über einen Stellbefehl skaliert eine entsprechend zugeordnete Größe normiert einstellbar ist.

Ein normierter Stellbefehl ist in diesem Zusammenhang ein Befehl, mit welchem z.B. ein normierter Volumenstrom und/oder eine normierte Durchflussmenge eingestellt werden kann. Beispielsweise können zu normierende Größen auf einen Volumenstrom z.B. in l/min abgebildet (normiert) werden, sodass unabhängig vom verwendeten Ventil (System- und Lastdruck) der gewünschte Volumenstrom z.B. durch eine Kennlinie eingestellt bzw. geregelt werden kann.

In einem weiteren bevorzugten Ausführungsbeispiel weist die Ventilregelung und/oder die Ventilsteuerung Wissen über das verwendete hydraulische Medium, wie z.B. dessen Viskosität auf. D.h. je nach Medium resultiert ein entsprechender Druck und eine entsprechende Ventileinstellung, wodurch sich vorteilhaft eine genauere Vorsteuerung ergibt.

Um vorteilhaft beim Tausch der Regelventile 2a, 2b, 13a, 13b keine erneute Kalibration vornehmen zu müssen, ist die Ventilregelung und/oder die Ventilsteuerung in einem weiteren bevorzugten Ausführungsbeispiel im oder am Regelventil 2a, 2b, 13a, 13b vorgesehen.

In einem weiteren bevorzugten Ausführungsbeispiel ist wenigstens ein Temperatursensor vorgesehen, wobei weiter bevorzugt pro Regelventil 2a, 2b, 13a, 13b jeweils wenigstens einen Temperatursensor, z.B. ein Temperaturaufnehmer vorgesehen ist. Vorteilhaft ergibt sich durch die Messung der Temperatur des Hydraulikmediums eine präzise Vorhersage hinsichtlich der Viskosität und folglich ein genauerer Durchflussstrom.

In einem weiteren bevorzugten Ausführungsbeispiel ist der Drucksensor 8 im oder am Regelventil 2a, 2b, 13a, 13b vorgesehen, wodurch sich Vorteile für den Fall eines Umbaus der Maschine ergeben, sodass keine speziellen Umbauten durchgeführt werden müssen.

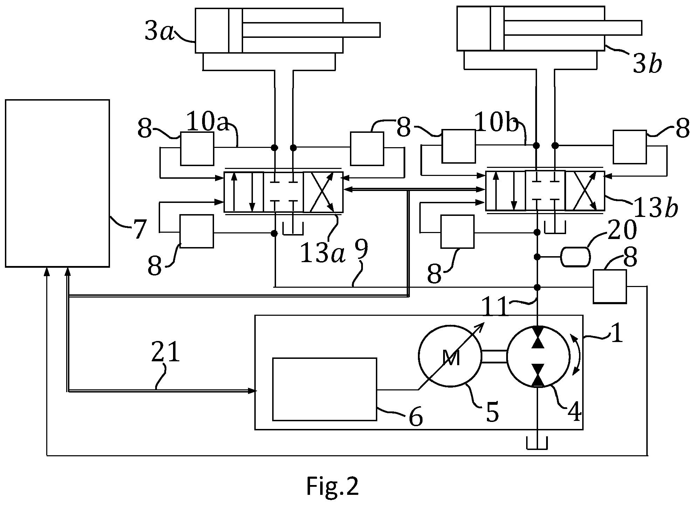

Das Ausführungsbeispiel gemäß Fig. 2 entspricht im Wesentlichen dem Ausführungsbeispiel gemäß Fig. 1, wobei in Fig. 2 keine Schaltventile 12a, 12b vorhanden sind. Die Regelventile 13a, 13b in Fig. 2 sind dort z.B. als Stetigventile mit Richtungsfunktion ausgeführt.

Das Ausführungsbeispiel gemäß Fig. 3 entspricht im Wesentlichen dem Ausführungsbeispiel der Fig. 1, wobei in Fig. 3 lediglich ein p/Q- als Regelventil 2a und ein Schaltventil 12a plus ein Schaltventil 12b am Zentralantriebsstrang für eine rein serielle Bewegung vorgesehen sind. Damit ist in diesem Fall nur der einen Arbeitseinheit 3a ein Regelventil zugeordnet.

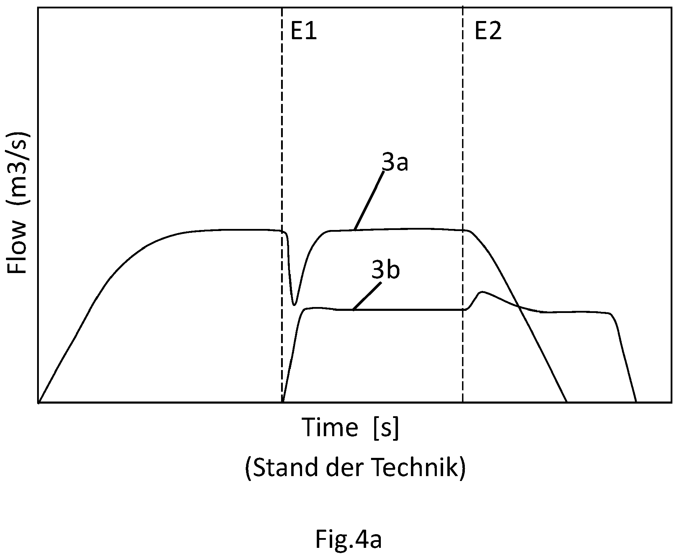

In Fig. 4a ist in einem Diagramm die Durchflussmenge in Kubikmetern pro Sekunde über der Zeit in Sekunden für zwei Arbeitseinheiten 3a, 3b ohne Vorsteuerung nach dem Stand der Technik aufgetragen. Zunächst beschleunigt die erste Arbeitseinheit 3a mit einem hohen Lastdruck, bis beim Zeitpunkt E1 die zweite Arbeitseinheit 3b mit einem geringeren Lastdruck beschleunigt. Durch das Beschleunigen der zweiten Arbeitseinheit 3b ergibt sich ein schematisch überhöht dargestellter Knick in der Durchflussmenge der ersten Arbeitseinheit 3a, da nun auch die zweite Arbeitseinheit 3b ebenfalls eine entsprechende Durchflussmenge benötigt. Im Zeitpunkt E2 bremst die erste Arbeitseinheit 3a ab, wodurch diese eine geringere Durchflussmenge benötigt, welche als "Überschwinger" bei der zweiten Arbeitseinheit 3b zu erkennen ist. Die beiden Arbeitseinheiten 3a, 3b beeinflussen sich somit stark gegenseitig, was zu Fehlern während des Arbeitsprozesses und hinsichtlich der Spritzgießteil-Qualität führen kann.

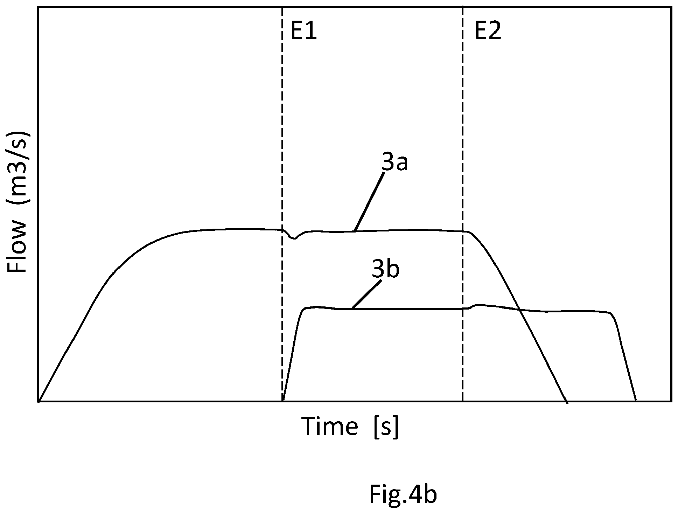

In Fig. 4b ist das gleiche Diagramm wie in Fig. 4a dargestellt, jedoch mit einer Sollwertvorsteuerung des Zentralantriebs 1 durch die Steuerung 7. Man erkennt bei den Zeitpunkten E1 und E2 eine deutlich geringere Beeinflussung der beiden Arbeitseinheiten 3a, 3b untereinander.

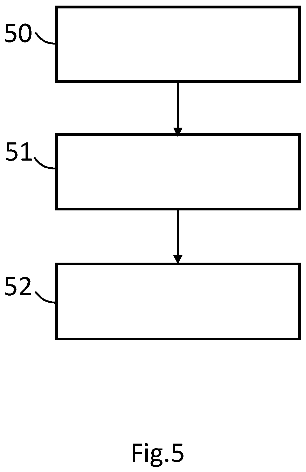

Fig. 5 zeigt ein schematisches Diagramm für ein Verfahren zur Steuerung und/oder Regelung einer Hydraulikeinrichtung zur Versorgung mehrerer Arbeitseinheiten 3a, 3b, insbesondere an einer Kunststoff-Spritzgießmaschine, mit wenigstens einer Steuerung 7 und einem Zentralantrieb 1, wobei an wenigstens einer der Arbeitseinheiten, vorzugsweise an allen Arbeitseinheiten 3a, 3b jeweils wenigstens ein Regelventil 2a, 2b, 13a, 13b vorgesehen ist. In einem Schritt 50 wird pro Regelventil 2a, 2b, 13a, 13b jeweils wenigstens eine Druckdifferenz aus jeweils wenigstens einem erfassten Druck vor und nach dem Regelventil 2a, 2b, 13a, 13b bestimmt. In einem weiteren Schritt 51 wird aus einem Zusammenhang zwischen der Regelventil-Geometrie und der Druckdifferenz des Regelventils 2a, 2b, 13a, 13b wenigstens ein Volumenstromistwert pro Regelventil 2a, 2b, 13a, 13b abgeleitet. In einem Schritt 52 wird aus den Volumenstromsollwerten der wenigstens einen Arbeitseinheit 3a, 3b und den Volumenstromistwerten der Regelventile 2a, 2b, 13a, 13b wenigstens eine Sollwertvorsteuerung für den Zentralantrieb 1 so abgeleitet, dass der Systemdruck 9 wenigstens dem höchsten Lastdruck 10a, 10b der Arbeitseinheiten 3a, 3b entspricht und/oder diesen um einen Wert übersteigt. Der Wert kann beispielsweise manuell eingegeben oder automatisch, z.B. über ein Netzwerk bezogen werden.

In einem bevorzugten Ausführungsbeispiel erfolgt die Sollwertvorsteuerung zeitlich kontrolliert und/oder in Echtzeit.

Für eine vorteilhafte Erkennung einer Leckage wird in einem weiteren bevorzugten Ausführungsbeispiel eine zyklische Integration der von den Regelventilen 2a, 2b, 13a, 13b geregelten normierten Volumenströme über wenigstens einen Arbeitseinheitszyklus ausgeführt. Anhand der Integration lässt sich erkennen, ob mehr Hydraulikmedium verwendet wurde, was auf eine Leckage hindeuten kann.

In einem weiteren bevorzugten Ausführungsbeispiel werden zur vorteilhaften Erkennung von Verschleiß an der Ventilmechanik, beispielsweise an Steuerkanten oder bei einer Leckage über einen Kolben, die Volumenstromistwerte der Regelventile 2a, 2b, 13a, 13b fortlaufend überwacht, ausgewertet und in Korrelation mit den Volumenstromistwerten während wenigstens eines zyklischen Maschinenbetriebs gesetzt.

Zur Ausführung von seriellen Bewegungen der Arbeitseinheiten 3a, 3b werden in einem bevorzugten Ausführungsbeispiel die Regelventile 2a, 2b, 13a, 13b als Schaltventile 12a, 12b und/oder zur Ausführung von gleichzeitigen Bewegungen der Arbeitseinheiten 3a, 3b als Load-Sensing-Regelventile betrieben.

In einem weiteren bevorzugten Ausführungsbeispiel wird die Berechnung der Sollwertvorsteuerung mittels eines zyklisch lernenden Beobachters selbstoptimierend angepasst. Durch den zyklisch lernenden Beobachter kann vorteilhaft ein Optimum an Dynamik und Energieverbrauch/Zyklus erhalten werden. Die Drucküberlagerung im Systemkreis kann so unter Beobachtung der Regelgüte in den Arbeitseinheitkreisen, insbesondere der auftretenden Drucküber-/Unterschwinger im Arbeitseinheitkreis selbstoptimierend angepasst werden.

### Bezugszeichenliste

- 1: Zentralantrieb
- 2a: Regelventil
- 2b: Regelventil
- 3a: Arbeitseinheit
- 3b: Arbeitseinheit
- 4: Pumpe
- 5: Motor
- 6: Motorsteuerung
- 7: Steuerung
- 8: Drucksensor
- 9: Systemdruck
- 10a: Lastdruck
- 10b: Lastdruck
- 11: Volumenstrom
- 12a: Schaltventil
- 12b: Schaltventil
- 13a: Regelventil
- 13b: Regelventil
- 20: Totvolumen
- 21: Verbindung
- 50: Schritt
- 51: Schritt
- 52: Schritt

## Patentansprüche

1. Hydraulikeinrichtung zur Versorgung von mehreren Arbeitseinheiten (3a, 3b), insbesondere an einer Kunststoff-Spritzgießmaschine zur Verarbeitung von Kunststoffen und anderer plastifizierbarer Materialien, mit wenigstens einer Steuerung (7), wenigstens einer Ventilregelung und/oder einer Ventilsteuerung und einem Zentralantrieb (1), wobei wenigstens einer der Arbeitseinheiten wenigstens ein Regelventil (2a, 2b, 13a, 13b) mit einer Regelventil-Geometrie zugeordnet ist, und wobei Drucksensoren (8) vorgesehen sind, welche dazu eingerichtet sind, pro Regelventil (2a, 2b, 13a, 13b) jeweils wenigstens einen Druck vor und nach dem Regelventil (2a, 2b, 13a, 13b), einen Lastdruck (10a, 10b) der Arbeitseinheiten (3a, 3b) und einen Systemdruck (9) zu erfassen,
wobei die Ventilregelung und/oder die Ventilsteuerung Wissen über die Regelventil-Geometrie der Regelventile (2a, 2b, 13a, 13b) aufweist und dazu eingerichtet ist, aus einem Zusammenhang zwischen der Regelventil-Geometrie und wenigstens einer aus den vor und nach den Regelventilen (2a, 2b, 13a, 13b) erfassten Drücken resultierenden Druckdifferenz wenigstens einen Volumenstromistwert pro Regelventil (2a, 2b, 13a, 13b) abzuleiten, und
die Steuerung (7) dazu eingerichtet ist, aus einem Volumenstromsollwert der wenigstens einen der Arbeitseinheiten (3a, 3b) und dem wenigstens einen Volumenstromistwert des wenigstens einen Regelventils (2a, 2b, 13a, 13b) wenigstens eine Sollwertvorsteuerung für den Zentralantrieb (1) so abzuleiten, dass der Systemdruck (9) wenigstens einem höchsten Lastdruck (10a, 10b) der Arbeitseinheiten (3a, 3b) entspricht, wobei mit den Regelventilen (2a, 2b, 13a, 13b) normierte Stellbefehle und/oder normierte Durchflussmengen und/oder normierte Volumenströme der wenigstens einen der Arbeitseinheiten (3a, 3b) unabhängig vom Systemdruck (9) und/oder dem Lastdruck (10a, 10b) der wenigstens einen der Arbeitseinheiten (3a, 3b) einstellbar sind.

2. Hydraulikeinrichtung nach Anspruch 1, **dadurch gekennzeichnet, dass** jeder Arbeitseinheit (3a, 3b) jeweils ein Regelventil (2a, 2b, 13a, 13b) zugeordnet ist.

3. Hydraulikeinrichtung nach Anspruch 1 oder 2, **dadurch gekennzeichnet, dass** die Ventilregelung und/oder die Ventilsteuerung im oder am Regelventil (2a, 2b, 13a, 13b) vorgesehen ist.

4. Hydraulikeinrichtung nach einem der vorhergehenden Ansprüche, **dadurch gekennzeichnet, dass** die Ventilregelung und/oder die Ventilsteuerung Wissen über das verwendete hydraulische Medium aufweist.

5. Hydraulikeinrichtung nach einem der vorhergehenden Ansprüche, **dadurch gekennzeichnet, dass** wenigstens ein Temperatursensor vorgesehen ist, bevorzugt, dass pro Regelventil (2a, 2b, 13a, 13b) jeweils wenigstens ein Temperatursensor vorgesehen ist, und dass der wenigstens eine Temperatursensor im oder am Regelventil (2a, 2b, 13a, 13b) vorgesehen ist.

6. Hydraulikeinrichtung nach einem der vorhergehenden Ansprüche, **dadurch gekennzeichnet, dass** der Drucksensor (8) im oder am Regelventil (2a, 2b, 13a, 13b) vorgesehen ist.

7. Hydraulikeinrichtung nach einem der vorhergehenden Ansprüche, **dadurch gekennzeichnet, dass** die Regelventil-Geometrie der Regelventile (2a, 2b, 13a, 13b) die Schieber-Geometrie des Ventilschiebers umfasst.

8. Verfahren zur Steuerung und/oder Regelung einer Hydraulikeinrichtung zur Versorgung von mehreren Arbeitseinheiten (3a, 3b), insbesondere an einer Kunststoff-Spritzgießmaschine zur Verarbeitung von Kunststoffen und anderer plastifizierbarer Materialien, mit wenigstens einer Steuerung (7) und einem Zentralantrieb (1), wobei wenigstens einer der Arbeitseinheiten (3a, 3b) jeweils wenigstens ein Regelventil (2a, 2b, 13a, 13b) mit einer Regelventil-Geometrie zugeordnet ist, wobei
- pro Regelventil (2a, 2b, 13a, 13b) jeweils wenigstens eine Druckdifferenz aus jeweils wenigstens einem erfassten Druck vor und nach dem Regelventil (2a, 2b, 13a, 13b) bestimmt wird,
- aus einem Zusammenhang zwischen der Regelventil-Geometrie und der Druckdifferenz des Regelventils (2a, 2b, 13a, 13b) wenigstens ein Volumenstromistwert pro Regelventil (2a, 2b, 13a, 13b) abgeleitet wird,
- aus wenigstens einem Volumenstromsollwert der wenigstens einen der Arbeitseinheiten (3a, 3b) und dem wenigstens einen Volumenstromistwert des wenigstens einen Regelventils (2a, 2b, 13a, 13b) wenigstens eine Sollwertvorsteuerung für den Zentralantrieb (1) so abgeleitet wird, dass ein Systemdruck (9) wenigstens einem höchsten Lastdruck (10a, 10b) der Arbeitseinheiten (3a, 3b) entspricht,
- wobei mit dem wenigstens einen Regelventil (2a, 2b, 13a, 13b) normierte Stellbefehle und/oder normierte Durchflussmengen und/oder normierte Volumenströme der wenigstens einen der Arbeitseinheiten (3a, 3b) unabhängig vom Systemdruck (9) und/oder dem Lastdruck (10a, 10b) der wenigstens einen der Arbeitseinheiten (3a, 3b) eingestellt werden.

9. Verfahren nach Anspruch 8, **dadurch gekennzeichnet, dass** jeweils ein Regelventil (2a, 2b, 13a, 13b) den Druck jeder Arbeitseinheit (3a, 3b) steuert.

10. Verfahren nach Anspruch 8 oder 9, **dadurch gekennzeichnet, dass** die Sollwertvorsteuerung zeitlich kontrolliert und/oder in Echtzeit erfolgt.

11. Verfahren nach einem der Ansprüche 8 bis 10, **dadurch gekennzeichnet, dass** wenigstens eine zyklische Integration der von den Regelventilen (2a, 2b, 13a, 13b) geregelten normierten Volumenströme über wenigstens einen Arbeitseinheitszyklus ausgeführt wird.

12. Verfahren nach einem der Ansprüche 8 bis 11, **dadurch gekennzeichnet, dass** die Volumenstromistwerte der Regelventile (2a, 2b, 13a, 13b) fortlaufend überwacht, ausgewertet und in Korrelation mit den Volumenstromistwerten während wenigstens eines zyklischen Maschinenbetriebs gesetzt werden.

13. Verfahren nach einem der Ansprüche 8 bis 12, **dadurch gekennzeichnet, dass** das wenigstens eine Regelventil (2a, 2b, 13a, 13b) bei seriellen Bewegungen der Arbeitseinheiten (3a, 3b) als Schaltventil (12a, 12b) und/oder bei gleichzeitigen Bewegungen der Arbeitseinheiten (3a, 3b) als Load-Sensing-Regelventil betrieben wird.

14. Verfahren nach einem der Ansprüche 8 bis 13, **dadurch gekennzeichnet, dass** eine Ableitung der Sollwertvorsteuerung mittels eines zyklisch lernenden Beobachters selbstoptimierend angepasst wird.

## Claims

1. A hydraulic device for supplying a plurality of work units (3a, 3b), in particular on a plastics injection molding machine for processing plastics and other plasticizable materials, comprising at least one controller (7), at least one closed-loop and/or open-loop valve control, and a central drive (1), wherein there is associated with at least one of the work units at least one control valve (2a, 2b, 13a, 13b) having a control valve geometry, and wherein pressure sensors (8) are provided which are configured to detect for each control valve (2a, 2b, 13a, 13b) at least one pressure upstream and downstream of the control valve (2a, 2b, 13a, 13b), a load pressure (10a, 10b) of the work units (3a, 3b) and a system pressure (9),
wherein the closed-loop and/or open-loop valve control has knowledge of the control valve geometry of the control valves (2a, 2b, 13a, 13b) and is configured to derive at least one actual value of volumetric flow for each control valve (2a, 2b, 13a, 13b) from a relationship between the control valve geometry and at least one pressure difference resulting from the pressures detected upstream and downstream of the control valves (2a, 2b, 13a, 13b), and
the controller (7) is configured to derive, from a setpoint of volumetric flow of the at least one of the work units (3a, 3b) and from the at least one actual value of volumetric flow of the at least one control valve (2a, 2b, 13a, 13b), at least one setpoint pre-control for the central drive (1), such that the system pressure (9) corresponds at least to a maximum load pressure (10a, 10b) of the work units (3a, 3b),
wherein standardised operation commands and/or standardised flow rates and/or standardised volumetric flows of the at least one of the working units (3a, 3b) are settable independently of the system pressure (9) and/or the load pressure (10a, 10b) of the at least one of the working units (3a, 3b) by means of the control valves (2a, 2b, 13a, 13b).

2. Hydraulic device according to claim 1, **characterized in that** a respective control valve (2a, 2b, 13a, 13b) is associated with each work unit (3a, 3b).

3. Hydraulic device according to claim 1 or 2, **characterized in that** the closed-loop valve control and/or open-loop valve control is provided in or on the control valve (2a, 2b, 13a, 13b).

4. Hydraulic device according to one of the preceding claims, **characterized in that** the closed-loop valve control and/or open-loop valve control has knowledge of the hydraulic medium used.

5. Hydraulic device according to one of the preceding claims, **characterized in that** at least one temperature sensor is provided, preferably **in that** at least one temperature sensor is provided for each control valve (2a, 2b, 13a, 13b), and **in that** the at least one temperature sensor is provided in or on the control valve (2a, 2b, 13a, 13b).

6. Hydraulic device according to one of the preceding claims, **characterized in that** the pressure sensor (8) is provided in or on the control valve (2a, 2b, 13a, 13b).

7. Hydraulic device according to one of the preceding claims, **characterized in that** the control valve geometry of the control valves (2a, 2b, 13a, 13b) includes the slide-valve geometry of the valve slide.

8. A method for open-loop control and/or closed-loop control of a hydraulic device for supplying a plurality of work units (3a, 3b), in particular on a plastics injection molding machine for processing plastics and other plasticizable materials, comprising at least one controller (7) and a central drive (1), wherein there is associated with at least one of the work units (3a, 3b) in each case at least one control valve (2a, 2b, 13a, 13b) comprising a control valve geometry, **characterized in that**
- for each control valve (2a, 2b, 13a, 13b) at least one pressure difference is determined from in each case at least one detected pressure upstream and downstream of the control valve (2a, 2b, 13a, 13b),
- at least one actual value of volumetric flow for each control valve (2a, 2b, 13a, 13b) is derived from a relationship between the control valve geometry and the pressure difference of the control valve (2a, 2b, 13a, 13b),
- at least one setpoint pre-control for the central drive (1) is derived from at least one setpoint of volumetric flow of the at least one of the work units (3a, 3b) and the at least one actual value of volumetric flow of the at least one control valve (2a, 2b, 13a, 13b), such that a system pressure (9) corresponds to at least a maximum load pressure (10a, 10b) of the work units (3a, 3b),
- wherein the at least one control valve (2a, 2b, 13a, 13b) is used to set standardized operation commands and/or standardized flow rates and/or standardized volumetric flows of the at least one of the work units (3a, 3b) independently of the system pressure (9) and/or the load pressure (1 0a, 10b) of the at least one of the work units (3a, 3b).

9. Method according to claim 8, **characterized in that** a respective control valve (2a, 2b, 13a, 13b) controls the pressure of each work unit (3a, 3b).

10. Method according to claim 8 or 9, **characterized in that** the setpoint pre-control is carried out with time control and/or in real time.

11. Method according to one of claims 8 to 10, **characterized in that** at least one cyclic integration of the standardized volumetric flows that are controlled by the control valves (2a, 2b, 13a, 13b) is carried out over at least one work unit cycle.

12. Method according to one of claims 8 to 11, **characterized in that** the actual values of volumetric flow of the control valves (2a, 2b, 13a, 13b) are continuously monitored, evaluated and correlated with the actual values of volumetric flow for at least one cyclic machine operation.

13. Method according to one of claims 8 to 12, **characterized in that** the at least one control valve (2a, 2b, 13a, 13b) is operated as a switching valve (12a, 12b) during serial movements of the work units (3a, 3b) and/or is operated as a load-sensing control valve during simultaneous movements of the work units (3a, 3b).

14. Method according to one of claims 8 to 13, **characterized in that** a derivation of the setpoint pre-control is adapted with self-optimization by a cyclically learning observer.

## Revendications

1. Dispositif hydraulique pour l'alimentation de plusieurs unités de travail (3a, 3b), en particulier une machine de moulage par injection de matières plastiques pour la transformation de matières plastiques et d'autres matériaux plastifiables, comportant au moins une unité de commande (7), au moins un réglage de soupape et/ou une commande de soupape et un actionneur central (1), dans laquelle est associé à au moins l'une des unités de travail au moins une soupape de réglage (2a, 2b, 13a, 13b) avec une géométrie de soupape de réglage, et dans laquelle des capteurs de pression (8) sont prévus et conçus pour mesurer individuellement, pour chaque soupape de réglage (2a, 2b, 13a, 13b), au moins une pression avant et après la soupape de réglage (2a, 2b, 13a, 13b), une pression de charge (10a, 10b) des unités de travail (3a,3b) et une pression de système (9), dans lequel le réglage de soupape et/ou la commande de soupape comprend des informations sur la géométrie des soupapes de réglage (2a, 2b, 13a, 13b) et est/sont conçu(s) pour déduire au moins une valeur effective de courant volumétrique par soupape de réglage (2a, 2b, 13a, 13b) à partir d'une relation entre la géométrie de soupape de réglage et au moins une différence de pression résultant des pressions mesurées avant et après les soupapes de réglage (2a, 2b, 13a, 13b) et
l'unité de commande (7) est conçue pour déduire à partir d'une valeur de consigne de courant volumétrique de la ou des unités de travail (3a, 3b) et de la ou des valeurs effectives de courant volumétrique de la ou des soupapes de réglage (2a, 2b, 13a, 13b) au moins un préréglage de la valeur de consigne pour l'actionneur central (1), de telle sorte que la pression de système (9) corresponde au moins à une pression de charge (10a, 10b) la plus haute possible des unités de travail (3a, 3b), des ordres de réglage normés et/ou des quantités d'écoulement normées et/ou des courants volumétriques normés de la ou des unités de travail (3a, 3b) étant réglables avec les soupapes de réglage (2a, 2b, 13a, 13b) indépendamment de la pression de système (9) et/ou de la pression de charge (10a, 10b) de la ou des unités de travail (3a, 3b).

2. Dispositif hydraulique selon la revendication 1, **caractérisé en ce qu'**une soupape de réglage (2a, 2b, 13a, 13b) est associée individuellement à chaque unité de travail (3a, 3b).

3. Dispositif hydraulique selon la revendication 1 ou 2, **caractérisé en ce que** le réglage de soupape et/ou la commande de soupape est/sont prévu(s) dans ou au niveau de la soupape de réglage (2a, 2b, 13a, 13b).

4. Dispositif hydraulique selon l'une des revendications précédentes, **caractérisé en ce que** le réglage de soupape et/ou la commande de soupape présente(nt) des informations sur le milieu hydraulique utilisé.

5. Dispositif hydraulique selon l'une des revendications précédentes, **caractérisé en ce qu'**au moins un capteur de température est prévu, de préférence, au moins un capteur de température par soupape de réglage (2a, 2b, 13a, 13b) et **en ce que** ou les capteurs de température est prévu dans ou au niveau de la soupape de réglage (2a, 2b, 13a, 13b).

6. Dispositif hydraulique selon l'une des revendications précédentes, **caractérisé en ce que** le capteur de pression (8) est prévu dans ou au niveau de la soupape de réglage (2a, 2b, 13a, 13b).

7. Dispositif hydraulique selon l'une des revendications précédentes, **caractérisé en ce que** la géométrie des soupapes de réglage (2a, 2b, 13a, 13b) comprend la géométrie du tiroir de soupape.

8. Procédé de commande et/ou de réglage d'un dispositif hydraulique pour l'alimentation de plusieurs unités de travail (3a, 3b), en particulier dans une machine de moulage par injection de matières plastiques pour la transformation de matières plastiques et d'autres matériaux plastifiables, comportant au moins une unité commande (7) et un actionneur central (1), au moins une soupape de réglage (2a, 2b, 13a, 13b) avec une géométrie de soupape de réglage étant associée individuellement à au moins l'une des unités de travail (3a, 3b), dans lequel
- au moins une différence de pression étant déterminée individuellement pour chaque soupape de réglage (2a, 2b, 13a, 13b) à partir d'au moins une pression mesurée avant et après la soupape de réglage (2a, 2b, 13a, 13b),
- au moins une valeur effective de courant volumétrique par soupape de réglage (2a, 2b, 13a, 13b) étant déduite à partir d'une relation entre la géométrie de soupape de réglage et la différence de pression de la soupape de réglage (2a, 2b, 13a, 13b),
- au moins un préréglage de valeur de consigne étant déduit pour l'actionneur central (1) à partir d'au moins une valeur de consigne de courant volumétrique de la ou des unités de travail (3a, 3b) et de la ou des valeurs effectives de courant volumétrique de la ou des soupapes de réglage (2a, 2b, 13a, 13b) de telle sorte qu'une pression de système (9) corresponde au moins à une pression de charge (10a, 10b) la plus haute possible des unités de travail (3a, 3b),
- dans lequel des ordres de réglage normés et/ou des quantités d'écoulement normées et/ou des courants volumétriques normés de la ou des unités de travail (3a, 3b) sont réglé(e)s avec la ou les soupapes de réglage (2a, 2b, 13a, 13b) indépendamment de la pression de système (9) et/ou de la pression de charge (10a, 10b) de la ou des unités de travail (3a, 3b).

9. Procédé selon la revendication 8, **caractérisé en ce qu'**une soupape de réglage (2a, 2b, 13a, 13b) commande individuellement la pression de chaque unité de travail (3a, 3b).

10. Procédé selon la revendication 8 ou 9, **caractérisé en ce que** le préréglage de valeur de consigne s'effectue dans le temps de manière contrôlée et/ou en temps réel.

11. Procédé selon l'une des revendications 8 à 10, **caractérisé en ce qu'**au moins une intégration cyclique des courants volumétriques normés réglés par les soupapes de réglage (2a, 2b, 13a, 13b) est réalisée sur au moins un cycle d'unité de travail.

12. Procédé selon l'une des revendications 8 à 11, **caractérisé en ce que** les valeurs effectives de courant volumétrique des soupapes de réglage (2a, 2b, 13a, 13b) sont surveillées, exploitées en continu et utilisées en corrélation avec les valeurs effectives de courant volumique pendant au moins un fonctionnement de machine cyclique.

13. Procédé selon l'une des revendications 8 à 12, **caractérisé en ce qu'**au moins une soupape de réglage (2a, 2b, 13a, 13b) est actionnée en cas de déplacements en série des unités de travail (3a, 3b) en tant que soupape de commutation (12a, 12b) et/ou en cas de déplacements simultanés des unités de travail (3a, 3b) en tant que soupape de réglage à détection de charge.

14. Procédé selon l'une des revendications 8 à 13, **caractérisé en ce qu'**une déviation du préréglage de la valeur de consigne est adaptée de manière à s'auto-optimiser au moyen d'un système d'observation à apprentissage cyclique.
